# EUROPEAN PATENT SPECIFICATION

(11) **EP 2 112 349 B1**
(45) Date of publication and mention of the grant of the patent: **10.04.2013**
(21) Application number: 09152804.2
(22) Date of filing: 13.02.2009
(51) Int. Cl.: F02B 25/04, F02B 77/08, F02D 41/14, F02B 37/00

(54) **A scavenge performance monitoring system and a method for monitoring a process parameter in the scavenging process of a longitudinally scavenged two-stroke large diesel engine**
System zur Überwachung der Spülleistung und Verfahren zur Überwachung eines Prozessparameters im Spülprozess eines längsgespülten großen Zweitaktdieselmotors
Système de surveillance de performance de vidange et procédé de surveillance d'un paramètre du procédé dans le processus d'évacuation d'un gros moteur diesel à deux temps vidangé de manière longitudinale

(30) Priority: 21.04.2008 EP 08154852
(43) Date of publication of application: 28.10.2009
(73) Proprietor: Wärtsilä Schweiz AG, 8401 Winterthur (CH)
(72) Inventor: Nanda, Sangram Kishore, 8408, Winterthur (CH)
(74) Representative: Sulzer Management AG

(56) References cited:
- EP-A- 1 380 737
- JP-A- 2004 316 456
- JP-A- 2005 076 490
- US-A- 4 903 648
- US-A- 5 899 178

## Description

The invention relates to a scavenge performance monitoring system to monitor a process parameter in the scavenging process of a longitudinal scavenged two-stroke large diesel engine as well as to a method for monitoring a process parameter in the scavenging process in accordance with the pre-characterizing part of the independent claims 1 and 8. JP-A-2005 076490 shows an example of such a monitoring system according to the prior art.

For the increase in power of reciprocating piston combustion engines, such as for example of large diesel engines for ships or stationary units for the production of electrical power, the fresh air is introduced into the combustion engine of a cylinder at raised pressure after a combustion stroke by means of a charging group, which is generally designed as an exhaust gas turbocharger. In this connection a part of the thermal energy of the exhaust gases, which leave the combustion chamber of the cylinder after the combustion stroke can be exploited. For this purpose the hot gases are conveyed out of the combustion chamber of the cylinder to the charging group by opening of an outlet valve. The charging group substantially comprises a turbine, which is driven by the hot exhaust gases entering the charging group under pressure. For its part the turbine drives a compressor through which fresh air is drawn in and compressed. The diffuser with turbine, an arrangement which is often simply termed a turbocharger and which in particular, but not only, in the case of two-stroke large diesel engines; uses a radial compressor as a compressor, is followed by a so-called diffuser, a air cooler, a water separator and an inlet receiver from where the compressed fresh air, also known as charge air or scavenging air is ultimately fed into the individual combustion chambers of the cylinders of the large diesel engine. By means of the use of a charging group of this kind the supply of fresh air can thus be increased and the efficiency of the combustion process in the combustion chamber of the cylinder can be improved.

In the case of large diesel engines, the feeding in of the air takes place at different places at the cylinder, depending on the type. Thus, for example, in longitudinally scavenged two-stroke engines, the air is introduced into the combustion chamber via scavenging slots which are arranged in the running surface in the lower region of the cylinder. In four-stroke engines the charge air is generally introduced via one or more inlet valves which are arranged in the cylinder cover. In this connection two-stroke engines are also certainly known which are equipped with inlet valves in the cylinder cover in place of scavenging slots in the lower region of the cylinder.

In this connection, in the operation of diesel combustion engines considerable quantities of nitrogen oxides (NOₓ) arise with a negative impact on the environment. For this reason enormous efforts have been made to protect the environment, that is to develop diesel engines with considerably reduced (NOₓ) emissions.

On the other hand, large diesel engines as a rule run over considerable time periods in permanent operation, which makes high demands on operational reliability and availability. For this reason, in particular long service intervals, that is high Time Between Overhaul (TBO), low wear and an economic usage of fuels and operating materials are central criteria for operators on selecting the machines.

In this connection, it is a well understood theory that increasing the power output from an engine with constant bore size and stroke would increase the specific fuel oil consumption provided the maximum cylinder pressure is kept constant. In most instances the increase in power output is done with an increase in peak pressure to keep the specific fuel oil consumption (sfoc) constant or target a lower value. However, on existing designs the increase in firing pressure is capped by other factors such as structural limitations and bearing loads.

This process of optimization for a low specific fuel oil consumption has to be achieved with low NOₓ to meet existing emission legislation. One of the key factors in this optimization process is the scavenging performance of individual cylinders. This performance can be accounted for to some extent by a light spring indicator diagram (pressure volume trace) as used in the past predominantly on loop and cross scavenged engines, for example to identify port fouling. However, this method does not quantify the efficiency of scavenging and flow regime through the cylinder liner. On present generation of slow speed diesel engines it is critical to understand and provide a measure for this process to achieve a better trade-off between sfoc and NOₓ emissions.

Improvements in computing capabilities over the past two decades have reduced the need for development of expensive prototypes required by diesel engine manufacturers for their product development as all the necessary mathematics and physical relationships between process parameters can now be simulated on a computer with high RAM and processing speeds. Computational Fluid Dynamics commonly known as CFD used to predict fluid flow and dynamics is now a common engineering tool used not only in diesel engine development but every aspect of engineering. The use of such tools in engine development have reduced the need to perform time and labour intensive experiments that otherwise would have been necessary. Moreover, as the simulation tools give a better understanding of the physical processes occurring within the cylinder it is possible to achieve ambitious targets such as increasing power output from a fixed cylinder dimension whilst simultaneously reducing the factor of safety which directly correlates to savings in cost. This is possible as the model is able to predict the size and shape of the flame within the combustion space, for example by using a reference fuel for which the ignition characteristics are known.

It is common practice to validate a CFD model with the data from a series of experiments carried out on a particular engine type and then using it as an extrapolation tool to map other engine layout diagrams and monitor their performance. However, it is also a well known fact that simple linear extrapolation does not necessarily give the correct results. One of the many factors which simulation tools fail to predict is the heat load on the hot parts from combustion based on the quality of fuel in service. The optimized engine design performs satisfactorily as long as the parameters are within the boundaries defined by the CFD model. This of course is a rare occurrence in practice unless the boundaries have been set generously taking into account influences from deterioration of components over time or poor maintenance.

As diesel engine technology is advancing in thermodynamic development with the use of such analytical tools it is essential to develop monitoring techniques that will be able to predict its performance and identify faults in the engine. The most common parameters used to monitor the thermodynamic performance of an engine are pressure and temperature at various points on the cycle. The most widely used technique for monitoring performance of diesel engines is the above mentioned pressure volume trace, a technology older than the diesel engine and commonly referred to as an indicator card. It is used to calculate the indicated power developed by a cylinder and when used with a light spring version, visualises the gas exchange process. The indicator instrument is used to obtain an out of phase diagram, commonly referred to as 'draw card', which helps detect faults during the injection and combustion period. This technique can fail to indicate certain faults in the thermodynamic process. It is because the technique relies on measuring pressure which is a function of temperature and has its limitations when it comes to monitoring present day diesel engines operating with lower air to fuel ratio.

This can be explained in simple terms, if the mass of air and volume are kept constant then a 100°C change in maximum cycle temperature will change the pressure by a factor of 1.04 which is small and cannot be detected on an indicator diagram with absolute certainty. When operating closer to stochiometric conditions, dissociation (an endothermic reaction that breaks the products back to reactants) takes place which reduces the cycle temperature. Therefore, significant changes in temperature and subsequently pressure are not observed. However, in a diesel engine cylinder with non-uniform air to fuel ratio across the cylinder the rate of combustion slows down in regions where the air-fuel mixture is rich. This influences the size of the flame and combustion period, increasing the rate of heat transfer to the combustion chamber components.

Up to now, it is not possible to identify such faults with the diagrams obtained from indicator instruments.

To develop a new technique it is essential to understand the interaction between a diesel engine and its load and the relationship between flame size and air fuel ratio. Operating the engine closer to thermal overload conditions will reduce the operating life of combustion chamber components and may cause catastrophic failure in some instances. It is of concern that certain abnormal cylinder conditions are not predicted by average exhaust gas temperature, which may only increase slightly. The past few years have seen an increase in piston running problems with a high incidence of cylinder liner scuffing while increasing power output for the same cylinder dimensions. A number of factors contribute to the start of scuffing and improper combustion is one of them.

It is thus an object of the invention to propose a monitoring system as well as a respective method that can predict the cylinder condition well in advance to prevent the loss of cylinder liner and any consequential damage to the adjoining units. In addition, it is another object of the invention to reduce the safety margins in every aspect of diesel engine design by improving their reliability and availability at the same time.

That is, it is an object to make available an improved two stroke large diesel engine having longer service intervals, lower wear and an more economic usage of fuels and operating materials, wherein NOₓ emissions are considerably reduced.

The subjects of the invention satisfying these objects are characterized by the features of the independent claims 1 and 8.

The dependent claims relate to particularly advantageous embodiments of the invention.

Thus, the invention relates to a scavenge performance monitoring system to optimize a process parameter in the scavenging process of a longitudinally scavenged two-stroke large diesel engine. The large diesel engine includes a piston being arranged to be movable to and fro in a cylinder along a running surface between a bottom dead centre and a top dead centre, wherein a fuel is fed into the cylinder of the large diesel engine by an injection nozzle. Scavenging slots are provided at an inlet region of the cylinder for the supply of a predetermined amount of scavenging air as well as an outlet valve which is provided at a cylinder cover of the cylinder for the expulsion of a combustion gas. In the operation state a fresh air is sucked in by an exhaust gas turbocharger and supplied to the cylinder as the scavenging air at a predetermined charge air pressure via the scavenging slots, so that an ignition gas mixture is generated in the cylinder from the scavenging air and the fuel. According to the invention, at least a first oxygen sensor and a second oxygen sensor is provided at the running surface of the cylinder in order to evaluate a scavenging performance in the cylinder of the large diesel engine.

It is essential for the present invention that at least a first oxygen sensor and a second oxygen sensor, and in practice preferably a plurality of oxygen sensors are provided at the running surface of the cylinder in order to evaluate a scavenging performance in the cylinder of the large diesel engine.

Using the method according to the present invention, the trapped air to fuel ratio and maximum cycle temperatures within individual cylinders can be locally predicted for the first time enabling to monitor the thermal condition system as add on to the standard indicator card technique that gives a more accurate indication of cylinder condition. The system and the method in accordance with the present invention can work independent of the indicator card technique which, if necessary, can of course additionally be incorporated into the system.

As a consequence improved scavenging in the cylinder of the engine is achieved, resulting in higher purity in the cylinder and a better trapped air to fuel ratio, that is to an optimal λ-value of the fuel air mixture in the cylinder. The effect of this is an optimized combustion duration which can be observed as lower exhaust gas temperature and combustion chamber component temperatures decreasing the risk of component failure and increasing TBO (Time between overhaul) at the same time.

In this connection, it is a main finding of the present invention that the scavenging processes which take place in a cylinder of a slow longitudinally scavenged large diesel engine are running slow enough so that well known oxygen sensors, for example a known λ-sonde can be used to monitor as well time resolved as position resolved changes in the ratio of the fuel-air mixture in the cylinder.

That is, regarding a given oxygen sensor provided at the running surface of a cylinder, the oxygen sensor can monitor the changes in the oxygen concentration in the scavenging air in dependence of time at the position of the oxygen sensor.

On the other hand, if the first oxygen sensor is placed at a given first position at the running surface of the cylinder and the second oxygen sensor is placed at a given second position at the running surface of the cylinder, the scavenge performance system in accordance with the present invention is able to monitor a difference in the oxygen concentration in the scavenging air between the first position of the first oxygen sensor and a second position of the second oxygen sensor.

Using more than two oxygen sensors and placing them for example at an inlet of the cylinder, in particular at an inlet receiver of the cylinder, at an outlet of the cylinder, in particular at an exhaust gas duct, and in addition a plurality of oxygen sensors circumferentially as well as along a longitudinal axis at the running surface of the cylinder, a time and position resolved profile of the flow of the scavenging air can be taken and, for example, a time and position resolved pattern of the oxygen concentration in the cylinder can be set up und used to optimize a variety of process parameters of the large diesel engine, such as fuel consumption, NOₓ emissions, temperature and mechanical load and so on.

As already mentioned, in a special embodiment that is very important in practice, a plurality of oxygen sensors is provided circumferentially at the running surface of the cylinder, and / or a plurality of oxygen sensors is provided along a longitudinal axis of the cylinder at the running surface of the cylinder.

In addition, in order to monitor the flow of the scavenge air from the inlet receiver to the exhaust gas duct, an oxygen sensor is preferably provided at an inlet near the scavenge slots, in particular at the inlet receiver, and / or a further oxygen sensor is provided at an outlet of the cylinder, in particular at the exhaust gas duct and / or at an exhaust-gas-manifold of the large diesel engine.

To record and evaluate data from the oxygen sensors, a data acquisition device is provided to acquire a signal from the oxygen sensor, in particular a real-time signal in order to quantify the scavenging performance on a cylinder, especially with respect to a crank angle of the large diesel engine.

The process parameter to be optimized in the operation state can be the scavenging performance itself, a combustion process, a specific fuel oil consumption, a component wear rate, an engine thermodynamic process parameter, a power balance between two cylinders, an NOₓ - specific fuel oil consumption trade off, a smoke development, an energy consumption and / or another process parameter in the scavenging process of the large diesel engine, wherein the process parameter is preferably optimized in dependence of the scavenging performance.

The invention relates also to a method for optimizing a process parameter in the scavenging process of a longitudinally scavenged two-stroke large diesel engine by a scavenge performance monitoring system. The two-stroke large diesel engine includes a piston being arranged to move to and fro in a cylinder along a running surface between a bottom dead centre and a top dead centre. In the operation state, a fuel is fed into the cylinder of the large diesel engine by an injection nozzle and scavenging slots are provided at an inlet region of the cylinder for the supply of a predetermined amount of scavenging air and an outlet valve is provided at a cylinder cover of the cylinder for the expulsion of a combustion gas, wherein a fresh air is sucked in by an exhaust gas turbocharger and supplied to the cylinder as the scavenging air at a predetermined charge air pressure via the scavenging slots, so that an ignition gas mixture is generated in the cylinder from the scavenging air and the fuel. According to the present invention, an oxygen concentration is detected by a first oxygen sensor and by a second oxygen sensor being provided at the running surface of the cylinder and a scavenging performance in the cylinder of the large diesel engine is evaluated from the oxygen concentration.

In a first embodiment, an oxygen concentration and / or a pulsation of a flow of the scavenging air and / or a profile of an oxygen signature is taken at multiple locations in the cylinder by a plurality of oxygen sensors provided circumferentially at the running surface of the cylinder and / or by a plurality of oxygen sensors provided along a longitudinal axis of the cylinder at the running surface of the cylinder.

Regarding a special embodiment which is very important in practice, an oxygen concentration and / or a pulsation of a flow of the scavenging air and / or a profile of an oxygen signature is taken by an oxygen sensor provided at an inlet to the scavenge slots, in particular at an inlet receiver and / or is taken by an oxygen sensor provided at an outlet of the cylinder, in particular at an exhaust gas duct and / or at an exhaust-gas-manifold.

Preferably, a signal from the oxygen sensor, in particular a real-time signal is acquired by a data acquisition device and the scavenging performance on a cylinder is quantified, especially with respect to a crank angle of the large diesel engine.

The process parameter to be optimized by a method in accordance with the present invention, is the scavenge performance itself, a combustion process, a specific fuel oil consumption, a component wear rate, an engine thermodynamic process parameter, a power balance between two cylinders, an NOₓ - specific fuel oil consumption trade off, a smoke development, an energy consumption and / or another process parameter in the scavenging process of the large diesel engine, and / or wherein the process parameter is optimized in dependence of the scavenging performance.

Regarding a further special embodiment, a duration of a flow back around the scavenging slots and / or a mass of trapped residual gases in the cylinder and / or a type of flow regime and / or a cycle to cycle variation in the scavenging performance and / or an indication of unburned fuel is identified by the scavenge performance monitoring system.

In the following, the invention will be explained more closely with the help of the drawings which show:
- Fig. 1: schematically a longitudinally scavenged two-stroke large diesel engine with a scavenge performance monitoring system in accordance with the invention;
- Fig. 2: a preferred embodiment of a large two stroke diesel engine;
- Fig. 3: an area of cross section along I - I according to Fig. 2;

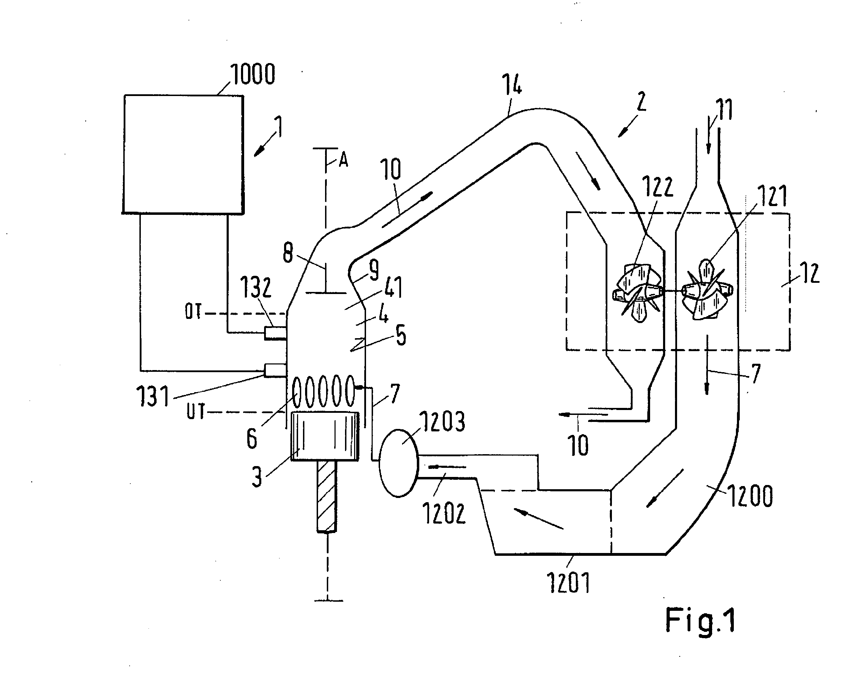

Fig. 1 shows in a schematic illustration for the explanation of the cooperation of the different components the construction in principle of a large diesel engine with an exhaust gas turbocharger system, which diesel engine is formed as a two-stroke large diesel engine with longitudinal scavenging and having a scavenge performance monitoring system in accordance with the present invention . In the following, the scavenge performance monitoring system is referred to with the reference numeral 1.

The large diesel engine 2 as in principle well known from the state of the art usually includes, in a manner known per se, a plurality of cylinders 4 with an outlet valve 8 arranged in a cylinder cover 9 of the cylinder 4, and a piston 3 being arranged to be movable to and fro in the cylinder 4 along a running surface 5 between a bottom dead centre UT and a top dead centre OT. The cylinder walls of the cylinder 4 with the cylinder cover 9 and the piston 3 bound a combustion space 41 of the cylinder 4 in known manner. A plurality of scavenging air apertures 6 are provided in an inlet region of the cylinder 4, which are designed as scavenging slots 6. Depending on the position of the piston 3 the scavenging slots 6 are covered or exposed by it. The scavenging air 7 also termed charge air 7 can flow into the combustion space 41 of the cylinder 4 through the scavenging slots 6. The combustion gases 10 occurring during the combustion, flow through the outlet valve 8 arranged in the cylinder cover 9 through an exhaust gas duct 14, which is often designed as an exhaust-gas-manifold 14 which adjoins the outlet valve 8 into an exhaust gas turbocharger 12.

In a manner known per se the exhaust gas turbocharger 12 includes as essential components a compressor with a compressor rotor 121 for the compression of fresh air 11 and also a turbine with a turbine rotor 122 for driving of the compressor rotor 121 which is fixedly connected to the turbine rotor 122 by a shaft. The turbine and the compressor are arranged in a housing and form the exhaust gas turbocharger 12 which in the present case is formed as a radial compressor at the compressor side. The turbine is driven by the hot combustion gases 10 flowing in from the combustion space 41 of the cylinder 4.

For the charging of the combustion chamber 41 of the cylinder 4 with scavenging air 7 fresh air 11 is sucked in through the compressor rotor 121 via an intake air stub and is compressed to an elevated pressure in the exhaust gas turbocharger 12, which is somewhat higher than the charge air pressure finally prevailing in the cylinder 4. The compressed fresh air 11 passes out of the exhaust gas turbocharger 12 as scavenging air 7 through the following diffuser 1200 and the charge air cooler 1201 via the water separator 1202 into an inlet receiver 1203 which is preferably formed as a receiver space 1203 and from where the compressed fresh air 11 as scavenging air 7 ultimately passes through the scavenging slots 6 at an increased charge air pressure into the combustion space 41 of the cylinder 4.

According to the present invention, a scavenge performance monitoring system 1 with a first oxygen sensor 131 and a second oxygen sensor 132 is provided at the running surface 5 of the cylinder 4 in order to evaluate a scavenging performance in the cylinder 4 of the large diesel engine 2.

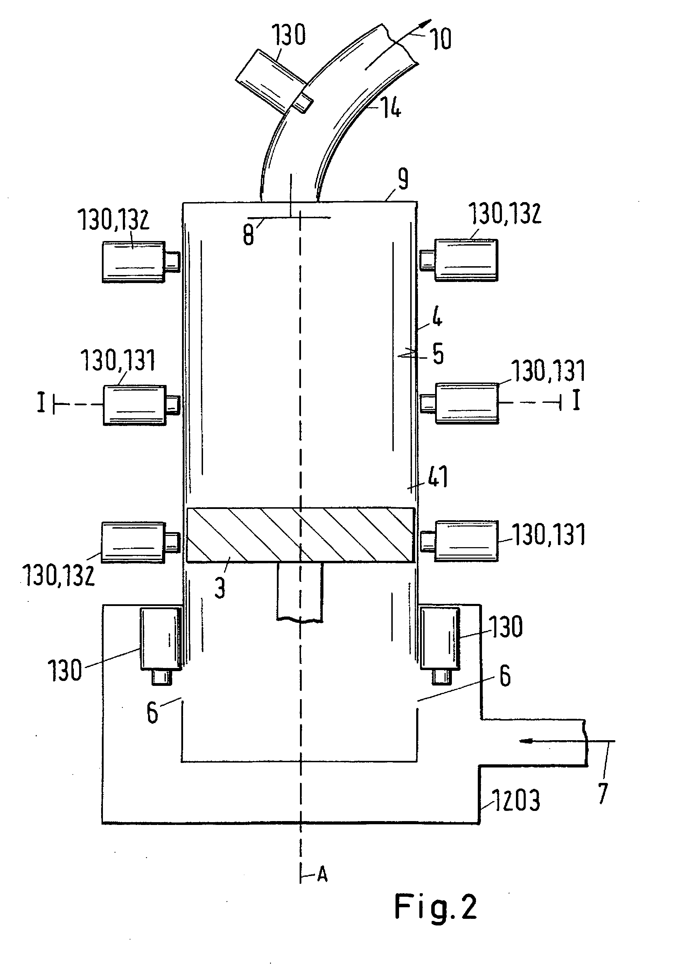

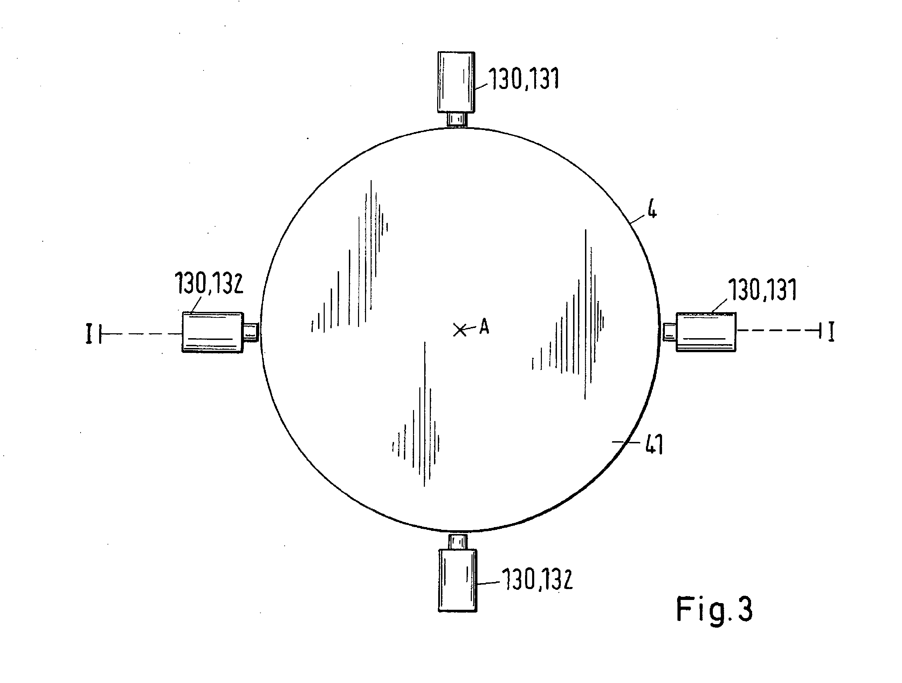

By Fig. 2 and Fig. 3 a preferred embodiment of a large two stroke diesel engine which is very important in practice is displayed. Fig. 3 is an area of cross section along the line I - I according to Fig. 2.

For reasons of simplicity, only one cylinder 4 of the large diesel engine 2 is displayed. The cylinder 4 has a cylinder cover 9 and a piston 3 being arranged to be movable to and fro in the cylinder 4 along a running surface 5, as well known from the state of the art. The cylinder walls of the cylinder 4 with the cylinder cover 9 and the piston 3 bound a combustion space 41 of the cylinder 4 in known manner. A plurality of scavenging air apertures 6 are provided in an inlet region of the cylinder 4, which are designed as scavenging slots 6. The scavenging air 7 flows in the operation state out of the receiver space 1203, that receives the scavenging air 7 from the exhaust gas turbocharger 12, (not shown in Fig. 2) through the scavenging slots 6 into the combustion space 41 of the cylinder 4. The combustion gases 10 occurring during the combustion, flow through the outlet valve 8 arranged in the cylinder cover 9 through an exhaust gas duct 14, that adjoins the outlet valve 8 into the exhaust gas turbocharger 12.

Regarding the preferred embodiment of Fig. 2 and Fig. 3, respectively an oxygen concentration and / or a pulsation of a flow of the scavenging air 7 and / or a profile of an oxygen signature is taken at multiple locations in the cylinder 4 by a plurality of oxygen sensors 130, 131, 132 provided both circumferentially at the running surface 5 of the cylinder 4, as shown in Fig. 3, and along the longitudinal axis A of the cylinder 4 at the running surface 5, as can be seen from Fig. 2. In addition, an oxygen sensor 130 is provided at the scavenge slots 7 within the receiver space 1203 and at the exhaust gas duct 14.

Using a scavenge performance monitoring system according to Fig. 2 and Fig. 3, the flow of the scavenge air 7 from the inlet receiver 1203, through the cylinder 4 and to the exhaust gas duct 14, can be monitored by each oxygen sensor 130, 131, 132 in real time so that a time and position resolved pattern of the oxygen concentration and / or the flow in the cylinder can be set up und used to optimize a variety of process parameters of the large diesel engine, such as fuel consumption, NOₓ emissions, temperature and mechanical load and so on.

To complete the discussion, the technical background and the concept of the scavenging performance monitoring system in accordance with the present invention can be summarized as follows.

All slow speed two stroke diesel engines depend on the pressure differential between the scavenge and exhaust manifold to clean the cylinder of products of combustion and charge it with fresh air for combustion in the following cycle. It is the optimization of this gas exchange process which is crucial to achieve a better trade-off between specific fuel oil consumption and NOₓ during prototype and in service tests. In the present generation of optimized slow speed diesel engines partial impairment of the gas exchange process could result in lower TBO's and in some cases component failure. Evaluation of the gas exchange process along with other process parameters will provide an indication of the engine thermodynamic performance. The most common parameters used to monitor the thermodynamic performance of an engine are pressure and temperature at various points on the cycle.

The most widely used technique in the state of the art for monitoring performance of diesel engines is a pressure volume trace, a technology older than the diesel engine and commonly referred to as an indicator card. In present day slow speed diesel engines it fails to indicate certain faults in the thermodynamic process which are critical to engine performance during tests and in service. The scavenge performance monitoring system uses an array of oxygen sensors to evaluate the scavenging performance of an engine. Sensors for the system will be fitted on one or multiple points at the following positions on an individual or all cylinders of the engine:
1. at the inlet to the scavenge ports;
2. circumferentially on the liner;
3. along the stroke of the liner;
4. at the outlet from the cylinder.

Thereby, the scavenge performance monitoring system of the present invention will be used to identify the following process parameters in the scavenging process:
1. the duration of blow back around the ports during the start of the scavenging process;
2. mass of trapped residual gases in the cylinder at the instant the exhaust valve closes i.e. cylinder purity at the start of compression;
3. type of flow regime i.e. plug flow, perfect mixing and/or short circuiting through the cylinder and their duration as a function of crank angle or port and exhaust valve open fraction;
4. cycle to cycle variations in scavenging performance on an individual cylinder and on multiple cylinders;
5. indication of extended combustion in the cylinder and unburnt fuel in the exhaust gas;
6. profile of the oxygen signature taken from multiple locations will give an indication of any pulsation in flow through the cylinder.

Real time signals from the sensors will be acquired by a data acquisition system with respect to crank angle of the engine and evaluated to quantify the scavenging performance. The system can be used in particular for the following applications:
1. monitoring and optimisation of the combustion process on test bed and in service;
2. specific fuel oil consumption optimisation;
3. optimisation of component wear rate during design and re-optimisation on real time component wear measurement in service;
4. optimisation of engine thermodynamic process parameters with different fuel grades encountered in service;
5. performance monitoring of engines on test bed and in service;
6. power balance between cylinders;
7. optimisation of NOₓ - sfoc trade-off;
8. achieve smokeless Operation;
9. energy saving with engine as part of a larger power plant.

It is to be understood that all of the embodiments in accordance with the invention described in this application are to be understood merely by way of example and in particular all embodiments as described or obvious within the context of the present invention, can be provided either alone or in all suitable combinations in special examples of embodiments in accordance with the invention, so that all suitable combinations of the embodiments described in this invention are included and covered by the present invention.

## Claims

1. A scavenge performance monitoring system to optimize a process parameter in the scavenging process of a longitudinally scavenged two-stroke large diesel engine (2), having a piston (3) being arranged to be movable to and fro in a cylinder (4) along a running surface (5) between a bottom dead centre (UT) and a top dead centre (OT), wherein a fuel is fed into the cylinder (4) of the large diesel engine (2) by an injection nozzle and scavenging slots (6) are provided at an inlet region of the cylinder (4) for the supply of a predetermined amount of scavenging air (7) and an outlet valve (8) is provided at a cylinder cover (9) of the cylinder (4) for the expulsion of a combustion gas (10), wherein in the operation state a fresh air (11) is sucked in by an exhaust gas turbocharger (12) and supplied to the cylinder (4) as the scavenging air (7) at a predetermined charge air pressure via the scavenging slots (6), so that an ignition gas mixture is generated in the cylinder (4) from the scavenging air (7) and the fuel, **characterized in that** at least a first oxygen sensor (130, 131) and a second oxygen sensor (130, 132) is provided at the running surface (5) of the cylinder (4) in order to evaluate a scavenging performance in the cylinder (4) of the large diesel engine (1).

2. A scavenge performance monitoring system in accordance with claim 1, wherein a plurality of oxygen sensors (130, 131, 132) is provided circumferentially at the running surface (5) of the cylinder (4).

3. A scavenge performance monitoring system in accordance with any one of claims 1 or 2, wherein a plurality of oxygen sensors (130, 131, 132) is provided along a longitudinal axis (A) of the cylinder (4) at the running surface (5) of the cylinder (4).

4. A scavenge performance monitoring system in accordance with any one of the previous claims, wherein an oxygen sensor (130) is provided at an inlet to the scavenge slots (6), in particular at an inlet receiver (1302).

5. A scavenge performance monitoring system in accordance with any one of the previous claims, wherein an oxygen sensor (130) is provided at an outlet of the cylinder (4), in particular at an exhaust gas duct (14) and / or at an exhaust-gas-manifold (14).

6. A scavenge performance monitoring system in accordance with any one of the previous claims, wherein a data acquisition device (1000) is provided to acquire a signal from the oxygen sensor (130, 131, 132), in particular a real-time signal, in order to quantify the scavenging performance on a cylinder (4), especially with respect to a crank angle of the large diesel engine (2).

7. A scavenge performance monitoring system in accordance with any one of the previous claims, wherein the process parameter is the scavenge performance itself, a combustion process, a specific fuel oil consumption, a component wear rate, an engine thermodynamic process parameter, a power balance between two cylinders (4), an NOₓ - specific fuel oil consumption trade off, a smoke development, an energy consumption and / or another process parameter in the scavenging process of the large diesel engine (2), and / or wherein the process parameter is optimized in dependence of the scavenging performance.

8. A method for optimizing a process parameter in the scavenging process of a longitudinally scavenged two-stroke large diesel engine (2) by a scavenge performance monitoring system (1), wherein the two-stroke large diesel engine (2) includes a piston (3) being arranged to move to and fro in a cylinder (4) along a running surface (5) between a bottom dead centre (UT) and a top dead centre (OT), and wherein a fuel is fed into the cylinder (4) of the large diesel engine (2) by an injection nozzle and scavenging slots (6) are provided at an inlet region of the cylinder (4) for the supply of a predetermined amount of scavenging air (7) and an outlet valve (8) is provided at a cylinder cover (9) of the cylinder (4) for the expulsion of a combustion gas (10), wherein in the operation state a fresh air (11) is sucked in by an exhaust gas turbocharger (12) and supplied to the cylinder (4) as the scavenging air (7) at a predetermined charge air pressure via the scavenging slots (6), so that an ignition gas mixture is generated in the cylinder (4) from the scavenging air (7) and the fuel, **characterized in that** an oxygen concentration is detected by a first oxygen sensor (130, 131) and by a second oxygen sensor (130, 132) being provided at the running surface (5) of the cylinder (4) and a scavenging performance in the cylinder (4) of the large diesel engine (1) is evaluated from the oxygen concentration.

9. A method in accordance with claim 8, wherein an oxygen concentration and / or a pulsation of a flow of the scavenging air and / or a profile of an oxygen signature is taken at multiple locations in the cylinder (4) by a plurality of oxygen sensors (130, 131, 132) provided circumferentially at the running surface (5) of the cylinder (4).

10. A method in accordance with claim 8 or 9, wherein an oxygen concentration and / or a pulsation of a flow of the scavenging air and / or a profile of an oxygen signature is taken at multiple locations in the cylinder (4) by a plurality of oxygen sensors (130, 131, 132) provided along a longitudinal axis (A) of the cylinder (4) at the running surface (5) of the cylinder (4).

11. A method in accordance with any one of claim 8 to 10, wherein an oxygen concentration and / or a pulsation of a flow of the scavenging air and / or a profile of an oxygen signature is taken by an oxygen sensor (130) provided at an inlet to the scavenge slots (6), in particular at an inlet receiver (1302).

12. A method in accordance with any one of claim 8 to 11, wherein an oxygen concentration and / or a pulsation of a flow of the scavenging air and / or a profile of an oxygen signature is taken by an oxygen sensor (130) provided at an outlet of the cylinder (4), in particular at an exhaust gas duct (14) and / or at an exhaust-gas-manifold (14).

13. A method in accordance with any one of claim 8 to 12, wherein a signal from the oxygen sensor (130, 131, 132), in particular a real-time signal is acquire by a data acquisition device (1000) and the scavenging performance on a cylinder (4) is quantified, especially with respect to a crank angle of the large diesel engine (2).

14. A method in accordance with any one of claim 8 to 13, wherein the process parameter is the scavenge performance itself, a combustion process, a specific fuel oil consumption, a component wear rate, an engine thermodynamic process parameter, a power balance between two cylinders (4), an NOₓ - specific fuel oil consumption trade off, a smoke development, an energy consumption and / or another process parameter in the scavenging process of the large diesel engine (2), and / or wherein the process parameter is optimized in dependence of the scavenging performance.

15. A method in accordance with any one of claim 8 to 14, wherein a duration of a flow back around the scavenging slots (6) and / or a mass of trapped residual gases in the cylinder (4) and / or a type of flow regime and / or a cycle to cycle variation in the scavenging performance and / or an indication of unburned fuel is identified by the scavenge performance monitoring system (1).

## Patentansprüche

1. Spülleistungsüberwachungssystem zur Optimierung eines Prozessparameters in dem Spülprozess eines längsgespülten Zweitakt-Großdieselmotors (2), der einen Kolben (3) aufweist, der derart angeordnet ist, dass er in einem Zylinder (4) entlang einer Lauffläche (5) zwischen einem unteren Totpunkt (UT) und einem oberen Totpunkt (OT) hin- und herbewegbar ist, wobei ein Kraftstoff in den Zylinder (4) des Großdieselmotors (2) durch eine Einspritzdüse zugeführt wird und Spülschlitze (6) an einem Einlassbereich des Zylinders (4) für die Lieferung einer vorbestimmten Menge an Spülluft (7) vorgesehen sind und ein Auslassventil (8) an einer Zylinderabdeckung (9) des Zylinders (4) für den Ausstoß eines Verbrennungsgases (10) vorgesehen ist, wobei in dem Betriebszustand eine Frischluft (11) durch einen Abgasturbolader (12) eingesaugt und an den Zylinder (4) als die Spülluft (7) bei einem vorbestimmten Ladeluftdruck über die Spülschlitze (6) geliefert wird, so dass ein Zündungsgasgemisch in dem Zylinder (4) aus der Spülluft (7) und dem Kraftstoff erzeugt wird,
**dadurch gekennzeichnet, dass**
zumindest ein erster Sauerstoffsensor (130, 131) und ein zweiter Sauerstoffsensor (130, 132) an der Lauffläche (5) des Zylinders (4) vorgesehen sind, um eine Spülleistung in dem Zylinder (4) des Großdieselmotors (1) zu bewerten.

2. Spülleistungsüberwachungssystem nach Anspruch 1,
wobei eine Mehrzahl von Sauerstoffsensoren (130, 131, 132) am Umfang der Lauffläche (5) des Zylinders (4) vorgesehen ist.

3. Spülleistungsüberwachungssystem nach einem der Ansprüche 1 oder 2,
wobei eine Mehrzahl von Sauerstoffsensoren (130, 131, 132) entlang einer Längsachse (A) des Zylinders (4) an der Lauffläche (5) des Zylinders (4) vorgesehen ist.

4. Spülleistungsüberwachungssystem nach einem der vorhergehenden Ansprüche,
wobei ein Sauerstoffsensor (130) an einem Einlass zu den Spülschlitzen (6), insbesondere an einem Einlasssammler (1302) vorgesehen ist.

5. Spülleistungsüberwachungssystem nach einem der vorhergehenden Ansprüche,
wobei ein Sauerstoffsensor (130) an einem Auslass des Zylinders (4), insbesondere an einem Abgasrohr (14) und/oder an einem Abgaskrümmer (14) vorgesehen ist.

6. Spülleistungsüberwachungssystem nach einem der vorhergehenden Ansprüche,
wobei eine Datenaufnahmevorrichtung (1000) vorgesehen ist, um ein Signal von dem Sauerstoffsensor (130, 131, 132), insbesondere ein Echtzeitsignal aufzunehmen, um die Spülleistung an einem Zylinder (4) insbesondere in Bezug auf einen Kurbelwinkel des Großdieselmotors (2) zu quantifizieren.

7. Spülleistungsüberwachungssystem nach einem der vorhergehenden Ansprüche,
wobei der Prozessparameter die Spülleistung selbst, ein Verbrennungsprozess, ein spezifischer Kraftstoffölverbrauch, eine Komponentenverschleißrate, ein thermodynamischer Prozessparameter des Motors, ein Leistungsgleichgewicht zwischen zwei Zylindern (4), ein NOₓ-spezifischer Kraftstoffölverbrauchskompromiss, eine Rauchentwicklung, ein Energieverbrauch und/oder ein anderer Prozessparameter in dem Spülprozess des Großdieselmotors (2) ist und/oder wobei der Prozessparameter in Abhängigkeit der Spülleistung optimiert ist.

8. Verfahren zum Optimieren eines Prozessparameters in dem Spülprozess eines längsgespülten Zweitakt-Großdieselmotors (2) durch ein Spülleistungsüberwachungssystem (1), wobei der Zweitakt-Großdieselmotor (2) einen Kolben (3) aufweist, der derart angeordnet ist, dass er sich in einem Zylinder (4) entlang einer Lauffläche (5) zwischen einem unteren Totpunkt (UT) und einem oberen Totpunkt (OT) hin- und herbewegt, und wobei ein Kraftstoff in den Zylinder (4) des Großdieselmotors (2) durch eine Einspritzdüse zugeführt wird und Spülschlitze (6) an einem Einlassbereich des Zylinders (4) für die Lieferung einer vorbestimmten Menge an Spülluft (7) vorgesehen sind und ein Auslassventil (8) an einer Zylinderabdeckung (9) des Zylinders (4) für den Ausstoß eines Verbrennungsgases (10) vorgesehen ist, wobei in dem Betriebszustand eine Frischluft (11) durch einen Abgasturbolader (12) eingesaugt und an den Zylinder (4) als die Spülluft (7) bei einem vorbestimmten Ladeluftdruck über die Spülschlitze (6) geliefert wird, so dass ein Zündungsgasgemisch in dem Zylinder (4) aus der Spülluft (7) und dem Kraftstoff erzeugt wird,
**dadurch gekennzeichnet , dass**
eine Sauerstoffkonzentration durch einen ersten Sauerstoffsensor (130, 131) und durch einen zweiten Sauerstoffsensor (130, 132) detektiert wird, die an der Lauffläche (5) des Zylinders (4) vorgesehen sind, und eine Spülleistung in dem Zylinder (4) des Großdieselmotors (1) aus der Sauerstoffkonzentration bewertet wird.

9. Verfahren nach Anspruch 8,
wobei eine Sauerstoffkonzentration und/oder eine Pulsierung einer Strömung der Spülluft und/oder ein Profil einer Sauerstoffsignatur an mehreren Stellen in dem Zylinder (4) durch eine Mehrzahl von Sauerstoffsensoren (130, 131, 132) genommen werden, die am Umfang der Lauffläche (5) des Zylinders (4) vorgesehen sind.

10. Verfahren nach einem der Ansprüche 8 oder 9,
wobei eine Sauerstoffkonzentration und/oder eine Pulsierung einer Strömung der Spülluft und/oder ein Profil einer Sauerstoffsignatur an mehreren Stellen in dem Zylinder (4) durch eine Mehrzahl von Sauerstoffsensoren (130, 131, 132) genommen werden, die entlang einer Längsachse (A) des Zylinders (4) an der Lauffläche (5) des Zylinders (4) vorgesehen sind.

11. Verfahren nach einem der Ansprüche 8 bis 10,
wobei eine Sauerstoffkonzentration und/oder eine Pulsierung einer Strömung der Spülluft und/oder ein Profil einer Sauerstoffsignatur durch einen Sauerstoffsensor (130) genommen werden, der an einem Einlass zu den Spülschlitzen (6), insbesondere an einem Einlasssammler (1302) vorgesehen ist.

12. Verfahren nach einem der Ansprüche 8 bis 11,
wobei eine Sauerstoffkonzentration und/oder eine Pulsierung einer Strömung der Spülluft und/oder ein Profil einer Sauerstoffsignatur durch einen Sauerstoffsensor (130) genommen werden, der an einem Auslass des Zylinders (4), insbesondere an einem Abgasrohr (14) und/oder an einem Abgaskrümmer (14) vorgesehen ist.

13. Verfahren nach einem der Ansprüche 8 bis 12,
wobei ein Signal von dem Sauerstoffsensor (130, 131, 132), insbesondere ein Echtzeitsignal durch eine Datenaufnahmevorrichtung (1000) aufgenommen wird und die Spülleistung an einem Zylinder (4) insbesondere in Bezug auf einen Kurbelwinkel des Großdieselmotors (2) quantifiziert wird.

14. Verfahren nach einem der Ansprüche 8 bis 13,
wobei der Prozessparameter die Spülleistung selbst, ein Verbrennungsprozess, ein spezifischer Kraftstoffölverbrauch, eine Komponentenverschleißrate, ein thermodynamischer Prozessparameter des Motors, ein Leistungsgleichgewicht zwischen zwei Zylindern (4), ein NOₓ-spezifischer Kraftstoffölverbrauchskompromiss, eine Rauchentwicklung, ein Energieverbrauch und/oder ein anderer Prozessparameter in dem Spülprozess des Großdieselmotors (2) ist und/oder wobei der Prozessparameter in Abhängigkeit der Spülleistung optimiert ist.

15. Verfahren nach einem der Ansprüche 8 bis 14,
wobei eine Dauer einer Strömung zurück um die Spülschlitze (6) und/oder eine Masse von abgefangenen Restgasen in dem Zylinder (4) und/oder ein Typ eines Strömungsgebietes und/oder eine Variation von Zyklus zu Zyklus in der Spülleistung und/oder eine Angabe von nicht verbranntem Kraftstoff durch das Spülleistungsüberwachungssystem (1) festgestellt werden.

## Revendications

1. Système de surveillance de performance de vidange pour optimiser un paramètre de procédé dans le processus d'évacuation d'un grand moteur Diesel à deux temps (2) vidangé de manière longitudinale, comportant un piston (3) agencé pour être déplaçable selon un mouvement alternatif dans un cylindre (4) le long d'une surface de glissement (5) entre un point mort bas (UT) et un point mort haut (OT), où un combustible est amené dans le cylindre (4) du grand moteur Diesel (2) par une buse d'injection, et des fentes d'évacuation (6) sont réalisées à une région d'admission du cylindre (4) pour l'amenée d'une quantité prédéterminée d'air de balayage (7), et une vanne de sortie (8) est réalisée à un couvercle de cylindre (9) du cylindre (4) pour l'expulsion d'un gaz de combustion (10), dans lequel à l'état de fonctionnement, de l'air frais (11) est aspiré par un turbocompresseur de gaz d'échappement (12) et est fourni au cylindre (4) comme air de balayage (7) à une pression d'air de charge prédéterminée par les fentes d'évacuation (6), de sorte qu'un mélange de gaz d'allumage est produit dans le cylindre (4) par l'air de balayage (7) et le combustible, **caractérisé en ce qu'**au moins un premier capteur d'oxygène (130, 131) et un deuxième capteur d'oxygène (130, 132) est réalisé à la surface de glissement (5) du cylindre (4) pour évaluer la performance de vidange dans le cylindre (4) du grand moteur Diesel (1).

2. Système de surveillance de performance de vidange selon la revendication 1, dans lequel une pluralité de capteurs d'oxygène (130, 131, 132) est réalisée sur la circonférence à la surface de glissement (5) du cylindre (4) .

3. Système de surveillance de performance de vidange selon l'une des revendications 1 ou 2, dans lequel une pluralité de capteurs d'oxygène (130, 131, 132) est réalisée le long d'un axe longitudinal (A) du cylindre (4) à la surface de glissement (5) du cylindre (4).

4. Système de surveillance de performance de vidange selon l'une quelconque des revendications précédentes, dans lequel un capteur d'oxygène (130) est réalisé à une entrée aux fentes d'évacuation (6) en particulier à un récepteur d'admission (1302).

5. Système de surveillance de performance de vidange selon l'une quelconque des revendications précédentes, dans lequel un capteur d'oxygène (130) est réalisé à une sortie du cylindre (4), en particulier à un conduit de gaz d'échappement (14) et/ou à un collecteur de gaz d'échappement (14).

6. Système de surveillance de performance de vidange selon l'une quelconque des revendications précédentes, dans lequel un dispositif d'acquisition de données (1000) est fourni pour acquérir un signal du capteur d'oxygène (130, 131, 132)), en particulier un signal en temps réel, afin de quantifier la performance de vidange sur un cylindre (4), en particulier relativement à un angle de vilebrequin du grand moteur Diesel (2).

7. Système de surveillance de performance de vidange selon l'une quelconque des revendications précédentes, dans lequel le paramètre de procédé est la performance d'évacuation elle-même, un processus de combustion, une consommation de fuel spécifique, un taux d'usure de composant, un paramètre de processus thermodynamique du moteur, un équilibre de puissance entre deux cylindres (4), un compromis de consommation de fuel spécifique aux NOₓ , une production de fumée, une consommation d'énergie et/ou un autre paramètre de procédé dans le processus de vidange du grand moteur Diesel (2), et/ou dans lequel le paramètre de procédé est optimisé en fonction de la performance de vidange.

8. Procédé pour optimiser un paramètre de processus dans le processus de vidange d'un grand moteur Diesel (2) à deux temps vidangé de manière longitudinale par un système de surveillance de performance de vidange (1), dans lequel le grand moteur Diesel (2) à deux temps comprend un piston (3) agencé pour se déplacer selon un mouvement alternatif dans un cylindre (4) le long d'une surface de glissement (5) entre un point mort bas (UT) et un point mort haut (OT), et dans lequel un combustible est amené dans le cylindre (4) du grand moteur Diesel (2) par une buse d'injection, et des fentes d'évacuation (5) sont ménagées à une région d'admission du cylindre (4) pour l'amenée d'une quantité prédéterminée d'air de balayage (7), et une vanne de sortie (8) est réalisée à un couvercle de cylindre (9) du cylindre (4) pour l'expulsion d'un gaz de combustion (10), dans lequel, à l'état de fonctionnement, de l'air frais (11) est aspiré par un turbocompresseur de gaz d'échappement (12) et est amené au cylindre (4) comme air de balayage (7) à une pression d'air de charge prédéterminée par les fentes d'évacuation (6), de sorte qu'un mélange de gaz d'allumage est produit dans le cylindre (4) par l'air de balayage (7) et le combustible, **caractérisé en ce qu'**une concentration d'oxygène est détectée par un premier capteur d'oxygène (103, 131) et par un deuxième capteur d'oxygène (130, 132) réalisés à la surface de glissement (5) du cylindre (4), et une performance de vidange dans le cylindre (4) du grand moteur Diesel (1) est évaluée à partir de la concentration de l'oxygène.

9. Procédé selon la revendication 8, dans lequel une concentration de l'oxygène et/ou une pulsation d'un écoulement de l'air de balayage et/ou un profil d'une signature d'oxygène est détecté à des emplacements multiples dans le cylindre (4) par une pluralité de capteurs d'oxygène (130, 131, 132) réalisés sur la circonférence à la surface de glissement (5) du cylindre (4).

10. Procédé selon la revendication 8 ou 9, dans lequel une concentration de l'oxygène et/ou une pulsation d'un écoulement de l'air de balayage et/ou un profil d'une signature d'oxygène est détecté à des emplacements multiples dans le cylindre (4) par une pluralité de capteurs d'oxygène (130, 131, 132) réalisés le long d'un axe longitudinal (A) du cylindre (4) à la surface de glissement (5) du cylindre (4).

11. Procédé selon l'une quelconque des revendications 8 à 10, dans lequel une concentration d'oxygène et/ou une pulsation d'un écoulement de l'air de balayage et/ou un profil d'une signature d'oxygène est détecté par un capteur d'oxygène (130) réalisé à une entrée aux fentes d'évacuation (6), en particulier à un récepteur d'admission (1302).

12. Procédé selon l'une quelconque des revendications 8 à 11, dans lequel une concentration d'oxygène et/ou une pulsation d'un écoulement d'air de balayage et/ou un profil d'une signature d'oxygène est détecté par un capteur d'oxygène (130) réalisé à une sortie du cylindre (4), en particulier à un conduit de gaz d'échappement (14) et/ou à un collecteur de gaz d'échappement (14).

13. Procédé selon l'une quelconque des revendications 8 à 12, dans lequel un signal du capteur d'oxygène (130, 131, 132), en particulier un signal en temps réel est acquis par un dispositif d'acquisition de données (1000), et la performance de vidange sur un cylindre (4) est quantifiée, en particulier relativement à un angle de vilebrequin du grand moteur Diesel (2).

14. Procédé selon l'une quelconque des revendications 8 à 13, dans lequel le paramètre de procédé est la performance de vidange elle-même, un processus de combustion, une consommation de fuel spécifique, un taux d'usure de composant, un paramètre de processus thermodynamique du moteur, un équilibre de puissance entre deux cylindres (4), un compromis de consommation de fuel spécifique aux NOₓ, une production de fumée, une consommation d'énergie et/ou un autre paramètre de procédé dans le processus de vidange du grand moteur Diesel (2), et/ou dans lequel le paramètre de procédé est optimisé en fonction de la performance de vidange.

15. Procédé selon l'une quelconque des revendications 8 à 14, dans lequel une durée d'un reflux autour des fentes d'évacuation (6) et/ou une masse de gaz résiduels piégés dans le cylindre (4) et/ou un type de régime d'écoulement et/ou une variation de cycle en cycle dans la performance de vidange et/ou une indication de combustible non brûlé est identifiée par le système de surveillance de performance de vidange.
